# EUROPÄISCHE PATENTANMELDUNG

(11) **EP 1 531 455 A2**
(43) Veröffentlichungstag der Anmeldung: **18.05.2005**
(21) Anmeldenummer: 04025031.8
(22) Anmeldetag: 21.10.2004
(51) Int. Cl.: G10K 11/34

(54) **Verfahren zur Bildung eines Gruppensignals einer Richtcharakteristik einer Wandleranordnung**

(30) Priorität: 14.11.2003 DE 10353292
(71) Anmelder: ATLAS ELEKTRONIK GMBH, D-28305 Bremen (DE)
(72) Erfinder: Brenner, Axel, Dipl.-Ing., 28259 Bremen (DE); Stumpff, Ulrich, Dr., 28857 Syke (DE)

(57) **Zusammenfassung**

Bei einem Verfahren zur Bildung eines Gruppensignals einer Richtcharakteristik einer Wandleranordnung, die aus einer Gruppen von gemeinsam betriebenen, auf einem gekrümmten Träger angeordneten, elektroakustischen Wandler besteht, werden die an den Wandlern bei Schallempfang abnehmbaren elektrischen Empfangssignale zeitverzögert und zum Gruppensignal konphas aufaddiert. Um die für eine exakte Richtungsbildung erforderlichen, korrekten Verzögerungszeiten auch bei sich ändernden Randbedingungen, wie Variationen der Schallgeschwindigkeit oder nicht erkennbare Einbaufehlertoleranzen, exakt zu bestimmen, werden die Verzögerungszeiten der einzelnen Empfangssignale solange wiederholt vergrößert und verkleinert, bis der Wert einer Größe des Gruppensignals, z.B. dessen Pegel, maximal ist.

## Beschreibung

Die Erfindung betrifft ein Verfahren zur Bildung eines Gruppensignals einer Richtcharakteristik einer Wandleranordnung der im Oberbegriff des Anspruchs 1 definierten Gattung.

Bei der Bildung eines Gruppensignals einer Richtcharakteristik, dem sog. Beamforming, von nichtlinearen Antennen werden die Empfangssignale zum Zwecke ihrer konphasen Aufsummierung zeitlich so verzögert, als ob die einfallenden Schallwellenfront die Gruppe der gemeinsam betriebenen elektroakustischen Wandler an deren fiktiven Ort auf einer zur Hauptrichtung der Richtcharakteristik rechtwinklig ausgerichteten Linie gleichzeitig erreicht. Die fiktiven Orte werden durch rechtwinklige Projektion der tatsächlichen Orte der Wandler auf die genannte Linie erhalten. Die Größe der individuellen Verzögerungszeit für jeden Wandler wird als Quotient aus der Länge des Projektionsstrahls, also dem Abstand des fiktiven Orts des Wandlers vom tatsächlichen Wandlerort, und einem angenommenen mittleren Wert der Schallgeschwindigkeit bestimmt. Die berechneten Zeitverzögerungen werden für alle Gruppensignale abgespeichert, die für unterschiedliche Einfallsrichtungen der Schallwellen gebildet worden sind.

Bei einem bekannten Verfahren zur Richtungsbildung oder zum Beamforming (US 4 060 792) werden die Empfangssignale der elektroakustischen Wandler verstärkt, geklippt und mit einer Abtastfrequenz, die größer ist als das Zweifache der zugelassenen größten Signalfrequenz der Empfangssignale abgetastet. Die Abtastwerte oder Samples werden einem sog. Beamformer zugeführt, der zunächst die Abtastwerte um die zugehörigen, abgespeicherten Verzögerungszeiten verzögert und dann die zeitverzögerten Abtastwerte konphas addiert. Das Ergebnis des Beamforming ist die Richtcharakteristik der Wandleranordnung mit einer Hauptkeule, deren Achse, die sog. Hauptrichtung der Richtcharakteristik, die Einfallsrichtung der von der Wandleranordnung empfangenen Schallwellen bestimmt, und mit Nebenkeulen oder Nebenzipfeln, die durch eine Amplitudenstaffelung der zeitverzögerten Abtastwerte, das sog. Shading, z.B. durch eine Dolph-Tschebyschew-Wichtung, reduziert werden.

Durch Änderung der Schallgeschwindigkeit im Einsatzgebiet der Wandleranordnung, durch Überschreitung von Einbautoleranzen der Wandler, durch den die Wandler abdeckenden akustisch transparenten Hüllkörper, dessen Dicke und Materialkonstante relativ große Toleranzen aufweisen können, weichen die berechneten und abgespeicherten Verzögerungszeiten mehr oder weniger stark von den korrekten Verzögerungszeiten ab, so dass die Addition der Empfangssignale nicht mehr exakt konphas erfolgt. Dadurch verkleinert sich der maximale Empfangspegel des Gruppensignals, also der Ausgangspegel des Beamformers. Die Richtcharakteristik ist nicht exakt gebildet, und entsprechend ist die Peilung einer Schallquelle mit mehr oder weniger großem Fehler behaftet.

Der Erfindung liegt die Aufgabe zugrunde, bei einem Verfahren der eingangs genannten Art die für eine exakte Richtungsbildung erforderlichen, korrekten, individuellen Verzögerungszeiten für die Empfangssignale der Wandler auch bei sich ändernden Randbedingungen, wie Variation der Schallgeschwindigkeit oder nicht erkennbare Geometriefehler in der Wandleranordnung, exakt zu bestimmen.

Die Aufgabe wird erfindungsgemäß durch die Merkmale im Anspruch 1 gelöst.

Das erfindungsgemäße Verfahren hat den Vorteil, dass das Beamforming, also die Bildung des Gruppensignals der Richtcharakteristik der Wandleranordnung, mit korrekten Verzögerungszeiten durchgeführt wird, die dem einzelnen Einsatzfall angepasst sind, so dass das Ausgangssignal des Beamformers stets maximal ist. Das erfindungsgemäße Verfahren macht sich die Tatsache zunutze, dass der Ausgangspegel oder die Ausgangsleistung oder eine andere charakteristische Größe des Ausgangssignals des Beamformers, also des Gruppensignals, nur bei korrekt berechneten Verzögerungszeiten maximal ist. Indem das Verfahren die berechneten und abgespeicherten Verzögerungszeiten solange variiert, bis ein eindeutiges Maximum des Ausgangspegels oder der Ausgangsleistung vorliegt, ist sichergestellte, dass die zuletzt eingestellten Verzögerungszeiten die für die konphase Addition der Empfangssignale korrekten Verzögerungszeiten sind, die Richtungsbildung also mit größtmöglicher Genauigkeit vorgenommen worden ist.

Zweckmäßige Ausführungsformen des erfindungsgemäßen Verfahren mit vorteilhaften Weiterbildungen und Ausgestaltungen der Erfindung ergeben sich aus den weiteren Ansprüchen.

Gemäß einer bevorzugten Ausführungsform der Erfindung wird die Berechnung der Verzögerungszeiten für die Empfangssignale aus der Geometrie der Wandleranordnung unter Berücksichtung einer mittleren Schallgeschwindigkeit abgeleitet und für die Berechnung der vergrößerten bzw. verkleinerten Verzögerungszeiten ein konstantes Inkrement der Schallgeschwindigkeit vorgegeben, um das die mittlere Schallgeschwindigkeit verkleinert bzw. vergrößert wird.

Gemäß einer vorteilhaften Ausführungsform der Erfindung wird zur Bestimmung des Maximum des Größenwerts, z.B. des Pegelwerts, des Gruppensignals ein erster Größenwert, z.B. ein erster Pegelwert, mit gegenüber den Erstverzögerungszeiten verkleinerten Verzögerungszeiten und ein zweiter Größenwert, z.B. ein zweiter Pegelwert, mit gegenüber den Erstverzögerungszeiten vergrößerten Verzögerungszeiten bestimmt. Die beiden Größenwerte, z.B. Pegelwert, werden zu dem mit den Erstverzögerungszeiten bestimmten ursprünglichen Größenwert, dem Ursprungsgrößenwert, z.B. Ursprungspegelwert, in Bezug gesetzt. Letzteres kann mit zwei alternativen Verfahrensweisen vorgenommen werden, die in den Ansprüchen 4 und 5 sowie 6 und 7 angegebenen sind.

Die Erfindung ist anhand eines in der Zeichnung illustrierten Ausführungsbeispiels im folgenden näher beschrieben. Es zeigen:
- Fig. 1: eine schematische Darstellung einer Draufsicht einer Zylinderbasis mit 21 elektroakustischen Wandlern zur Illustrierung einer Wandleranordnung mit einer Gruppe von gemeinsam betriebenen elektroakustischen Wandlern,
- Fig. 2 bis 5: jeweils ein Diagramm zur Erläuterung des Verfahrens zur Bildung eines Gruppensignals einer Richtcharakteristik der Wandleranordnung gemäß Fig. 1.

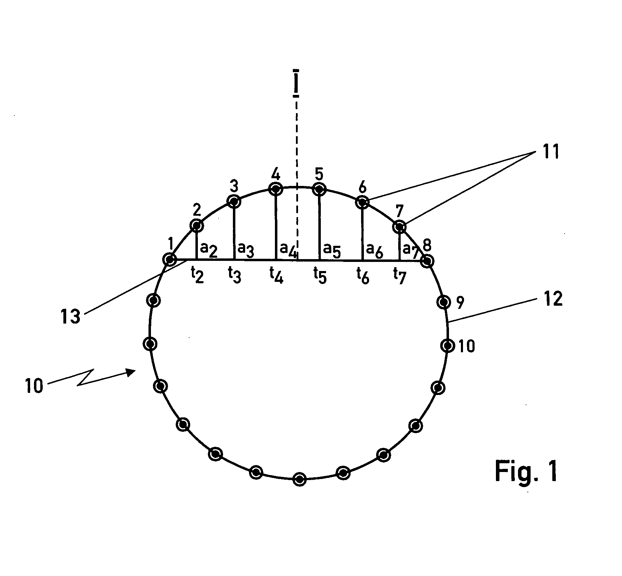

Bei dem nachfolgend beschriebenen Verfahren zur Bildung eines Gruppensignals einer Richtcharakteristik wird als Ausführungsbeispiel für eine Wandleranordnung 10, die Gruppen von gemeinsam betriebenen elektroakustischen Wandlern 11 aufweist, die auf einem gekrümmten Träger 12 angeordnet sind, eine sog. Zylinderbasis verwendet, auf deren Zylinderfläche beispielsweise 21 Wandler 11 äquidistant in Umfangsrichtung auf einer Kreislinie angeordnet sind. Wie nicht weiter dargestellt ist, sind üblicherweise zur Erzielung einer vertikalen Bündelung der Wandleranordnung, d.h. eines möglichst kleinen vertikalen Öffnungswinkels der Zylinderbasis, mehrere in Achsrichtung des Zylinders untereinander liegende Wandler zu einem sog. Stave zusammengefasst. Jeder der einundzwanzig Wandler 11 in Fig. 1 gehört damit zu einem Stave. Eine Gruppe von gemeinsam betriebenen Wandlern 11 oder Staves umfasst im Ausführungsbeispiel der Fig. 1 acht Wandler 11 bzw. Staves. Durch eine nachfolgend noch beschriebene Bildung des Gruppensignals hat die Gruppe der acht gemeinsam betriebenen elektroakustischen Wandler 11 bzw. Staves eine Richtcharakteristik, deren Hauptrichtung in Fig. 1 mit I gekennzeichnet ist. Diese Richtcharakteristik der Wandlergruppe, auch Gruppencharakteristik genannt, wird zur horizontalen Abtastung der Umgebung der Zylinderbasis elektronisch geschwenkt, wobei durch Hinzufügen eines Wandlers 11 an dem einen Ende der Wandlergruppe und Wegnehmen eines Wandlers 11 an dem anderen Ende der Wandlergruppe die Hauptrichtung I der Richtcharakteristik horizontal schrittweise um 360° gedreht werden kann.

Eine von einer Schallquelle abgestrahlte Schallwellenfront läuft über die einzelnen Wandler 11 hinweg, und die gemeinsam betriebenen acht Wandler 11 der Wandlergruppe liefern an ihrem Ausgang jeweils ein entsprechendes elektrisches Ausgangssignal, das nachfolgend als Empfangssignal bezeichnet wird. Die Empfangssignale werden in bekannter Weise zeitverzögert und konphas zum Gruppensignal aufaddiert. Die Verzögerungszeit tᵢ für jedes der Empfangssignale wird als Quotient aus dem Abstand aᵢ und der Schallgeschwindigkeit c berechnet. Wie Fig. 1 zeigt, ergibt sich der Abstand aᵢ für jeden Wandler 11 der acht gemeinsam betriebenen Wandler 11 aus der Projektion des tatsächlichen Ortes des elektroakustischen Wandlers 11 auf dem Träger 12 längs der Hauptrichtung I auf eine Gerade 13, die die Orte des ersten und letzten Wandlers 11 der Gruppe miteinander verbindet. Der Abstand aᵢ ist die Länge des jeweiligen Projektionsstrahls. Damit ergibt sich die Verzögerungszeit t₂ für den zweiten Wandler 11 in der Gruppe der acht Wandler zu a₂/c, die Verzögerungszeit t₃ für den dritten Wandler 11 in der Wandlergruppe zu a₃/c usw., wobei für c eine mittlere Schallgeschwindigkeit angenommen wird. Dieser Satz von Verzögerungszeiten tᵢ, im folgenden zusammenfassend mit τ₀ bezeichnet, wird in einem Speicher abgelegt. In gleicher Weise werden für alle geschwenkten Hauptrichtungen der Richtcharakteristik der auf der Zylinderbasis gebildeten Wandlergruppen von jeweils acht Wandlern ein gleicher Satz an Verzögerungszeiten abgespeichert.

Im beschriebenen Ausführungsbeispiel werden die Empfangssignale der acht elektroakustischen Wandler 11 um die jeweils zugeordnete Verzögerungszeit tᵢ mit i=2 bis 7, verzögert, wodurch bei richtig berechneten Verzögerungszeiten alle Empfangssignale konphas sind und korrekt miteinander addiert werden können. Sind die Verzögerungszeiten richtig berechnet, so fällt die empfangene Schallwelle in der Hauptrichtung I der Richtcharakteristik ein, so dass damit die Peilrichtung zu einem schallabstrahlenden Ziel festgestellt werden kann.

Im tatsächlichen Einsatzfall der Wandleranordnung kann der Satz der abgespeicherten Verzögerungszeiten τ₀ aber mehr oder weniger von den korrekten Zeitverzögerungszeiten abweichen, so z.B. durch Abweichung der im Einsatzgebiet bestehenden Schallgeschwindigkeit von der der Berechnung zugrundeliegenden, mittleren Schallgeschwindigkeit, durch Nichteinhalten von Einbautoleranzen der Wandler innerhalb der Zylinderbasis, durch Einflüsse des Hüllkörpers, der die Wandleranordnung abdeckt etc.. Um dennoch das Gruppensignal mit den korrekten Verzögerungszeiten zu bilden, wird nunmehr eine Größe des mit den abgespeicherten Satz von berechneten Verzögerungszeiten τ₀ gebildeten Gruppensignals, z.B. der Betrag, die Leistung oder der Pegel des Gruppensignals, als Bewertungsgröße für das Gruppensignal ausgewählt und die abgespeicherten Verzögerungszeiten τ₀ solange verkleinert und vergrößert bis die betrachtete Größe des Gruppensignals einen Maximalwert erreicht. Das Maximum der betrachteten Größe ist ein Anzeichen dafür, dass nunmehr die korrekten Verzögerungszeiten eingestellt worden sind, die das korrekte, die Richtcharakteristik der Wandleranordnung bestimmende Gruppensignal ergeben.

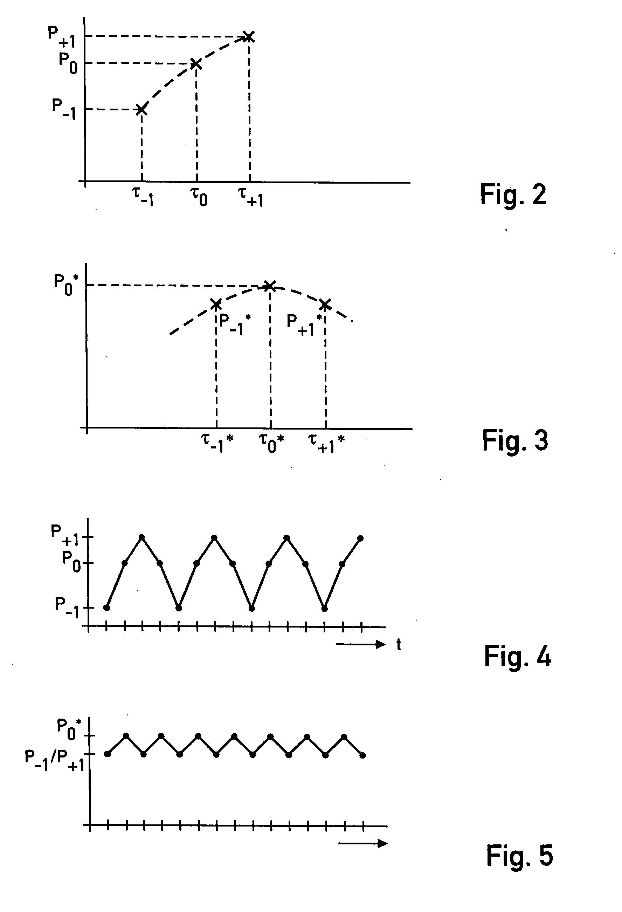

Das Verfahren, mit dem die korrekten Verzögerungszeiten bestimmt werden, wird im einzelnen nachfolgen anhand der Darstellungen in Fig. 2 bis 5 beschrieben. Als betrachtete Größe des Gruppensignals wird dabei der Pegel P des Gruppensignals gewählt.

Wie in Fig. 2 und 3 dargestellt ist, wird zur Bestimmung des Maximums des Pegels des Gruppensignals ein erster Pegelwert P₋₁ mit Verzögerungszeiten berechnet, die gegenüber den abgespeicherten Verzögerungszeiten τ₀ =(t₂, t₃ ... t₇), im folgenden Erstverzögerungszeiten genannt, verkleinert sind und ein zweiter Pegelwert P₊₁ mit gegenüber den Erstverzögerungszeiten vergrößerten Verzögerungszeiten bestimmt. Beispielsweise wird das Verkleinern bzw. Vergrößern der Erstverzögerungszeiten mit einer um ein konstantes Inkrement Δc vergrößerten bzw. verkleinerten mittleren Schallgeschwindigkeit c durchgeführt. Die Pegelwerte P₋₁ und P₊₁ werden in gleicher Weise bestimmt wie der Ursprungspegelwert P₀, indem die Empfangssignale der Wandler 11 um die verkleinerten bzw. vergrößerten Verzögerungszeiten verzögert und addiert werden. Im Diagramm der Fig. 2 sind die beiden mit verkleinerten Verzögerungszeiten τ₋₁ und vergrößerten Verzögerungszeiten τ₊₁ bestimmten Pegelwerte P₋₁ und P₊₁ zusammen mit dem Ursprungspegelwert P₀ dargestellt, der mit dem abgespeicherten Erstverzögerungszeiten τ₀ bestimmt worden ist. Der erste und der zweite Pegelwert P₋₁ und P₊₁ werden nunmehr in Bezug zu dem Ursprungspegelwert P₀ gesetzt, hier mit dem Pegelwert P₀ bezüglich ihrer Größe verglichen. Ist der erste oder zweite Pegelwert kleiner und der zweite oder erste Pegelwert größer als der Ursprungspegelwert P₀, d.h. der Pegelwert P₀ nicht größer als beide Pegelwerte P₋₁ und P₊₁, so ist dies ein Indiz dafür, dass der Ursprungspegelwert P₀ nicht maximal ist. Dies ist bei den in Fig. 2 dargestellten Pegelwerten der Fall. Nunmehr werden die abgespeicherten Erstverzögerungswerte τ₀ verändert, beispielsweise dadurch, dass der Wert der mittleren Schallgeschwindigkeit verändert wird, wodurch die einzelnen Verzögerungszeiten t₂ bis t₇ in dem Satz τ₀ der abgespeicherten Verzögerungszeiten entsprechend verändert werden. Mit dem veränderten Satz τ*₀ werden die Empfangssignale zeitverzögert und wiederum addiert und der korrigierte Ursprungspegelwert P*₀ des dadurch gewonnen korrigierten Gruppensignals gebildet. Nunmehr werden die vorstehend beschriebenen Verfahrensschritte, nämlich Bestimmung eines neuen ersten und zweiten Pegelwerts P*₋₁ und P*₊₁ durch Addition der Empfangssignale, die mit gegenüber den korrigierten Erstverzögerungszeiten τ*₀ verkleinerten bzw. vergrößerten Verzögerungszeiten verzögert worden sind, wiederholt. Der korrigierte Ursprungspegel P*₀ und die beiden neuen Pegelwerte P*₋₁ und P*₊₁ werden wiederum miteinander verglichen. Stellt sich bei diesem Vergleich heraus, dass der korrigierte Ursprungspegelwert P*₀ größer ist als die beiden neuen Pegelwerte P*₋₁ und P*₊₁,so ist das ein Anzeichen dafür, dass der korrigierte Ursprungspegelwert P*₀ nunmehr maximal ist.

Ergeben sich hingegen mit den veränderten Verzögerungszeiten für den korrigierten Ursprungspegelwert P*₀ und den neuen Pegelwerten P*₋₁ und P*₊₁ gleiche Verhältnisse, wie in Fig. 2 dargestellt sind, so werden erneut die abgespeicherten Verzögerungszeiten τ₀ korrigiert. Dies wird solange wiederholt, bis die Verhältnisse gemäß Fig. 3 eingetreten sind, also der sich zuletzt ergebende korrigierte Ursprungspegelwert P*₀ größer ist als die mit den verkleinerten und vergrößerten korrigierten Verzögerungszeiten τ*₀ berechneten beiden neuen Pegelwerte P*₋₁ und P*₊₁. Die Korrektur der Erstverzögerungszeiten τ₀ erfolgt zu größeren Verzögerungszeiten hin, wenn der zweite Pegelwert P₊₁ größer ist als der Ursprungspegelwert P₀, und zu kleineren Verzögerungszeiten hin, wenn der zweite Pegelwert P₊₁ kleiner ist als der Ursprungspegelwert P₀.

Bei einer Verfahrensvariante erfolgt das in Bezugsetzen der mit verkleinerten und vergrößerten Verzögerungszeiten berechneten ersten und zweiten Pegelwert P₋₁ und P₊₁ zu dem mit den abgespeicherten Erstverzögerungszeiten τ₀ berechneten Ursprungspegelwert P₀ nicht durch Größenvergleich der Pegelwerte, sondern mittels einer Frequenzanalyse. Hierzu werden die in Fig. 2 dargestellten Pegelwerte P₋₁, P₀ und P₊₁ mehrmals in der genannten Reihenfolgen vor- und rückwärts abgetastet und die Folge der Abtastwerte, wie sie in Fig. 4 dargestellt ist, einer Frequenzanalyse unterzogen. Die durch die Frequenzanalyse bestimmte spektrale Frequenz wird mit der Abtastfrequenz verglichen. Ist die spektrale Frequenz kleiner als die doppelte Abtastfrequenz so ist dies ein Anzeichen dafür, dass der Ursprungspegelwert P₀ kein Maximum ist. Wie zuvor beschrieben, wird in diesem Fall wiederum der Satz der abgespeicherten Erstverzögerungszeiten τ₀ geändert, und die um die korrigierten Erstverzögerungszeiten τ₀ verzögerten Empfangssignale der Wandler zum korrigierten Gruppensignal addiert und der Pegel P*₀ des korrigierten Gruppensignals bestimmt. In gleicher Weise wie vorstehend beschrieben, werden die Empfangssignale mit Verzögerungszeiten, die gegenüber den korrigierten Erstverzögerungszeiten einmal verkleinert und einmal vergrößert sind, verzögert und zu Gruppensignalen aufaddiert und daraus die neuen Pegelwerte P*₋₁ und P*₊₁ bestimmt, wie sie z.B. in Fig. 3 dargestellt sind. Diese Pegelwerte werden erneut in der gleichen Weise abgetastet, und die Folge der Abtastwerte, wie sie z.B. in Fig. 5 dargestellt ist, wird einer Frequenzanalyse unterzogen. Ist die mit der Frequenzanalyse ermittelte spektrale Frequenz gleich der doppelten Abtastfrequenz, wie dies im Beispiel der Fig. 4 und 5 angenommen ist, so stellt der geänderte Ursprungspegelwert P*₀ ein Maximum dar.

Um das Verfahren zu beschleunigen, ist es von Vorteil, die optimale Richtung der Korrektur der Erstverzögerungszeiten τ₀ zu kennen, also zu wissen, ob die Erstverzögerungszeiten τ₀ zu größeren oder kleineren Verzögerungszeiten hin verschoben werden müssen, um das Maximum des Pegelwerts des Gruppensignals zu erreichen. Hierzu wird die Phase des aus einer komplexen Fouriertransformation der Folge der Abtastwerte gewonnenen Fouriersignals bestimmt. Ist die Phase positiv, so werden die Erstverzögerungszeiten τ₀ vergrößert, ist sie negativ, so werden die Erstverzögerungszeiten verkleinert. Diese wird in gleicher Weise auch auf die jeweiligen korrigierten Erstverzögerungszeiten τ*₀ angewendet, und zwar solange, bis die spektrale Frequenz gleich der doppelten Abtastfrequenz ist, der zuletzt geänderte Ursprungspegelwert P*₀ als maximal ist.

Das beschriebene Verfahren ist bei allen Wandleranordnungen einsetzbar, die nichtlinear sind, d.h. bei Wandleranordnungen, bei denen die Wandler nicht auf einem langgestreckten, geraden Träger oder einer ebenen Fläche angeordnet sind, und die zumindest abschnittweise Wandler oder Staves aufweisen, die bezüglich einer Schalleinfallsrichtung achs- oder spiegelsymmetrisch angeordnet sind. Solche Wandler sind die sog. Zylinderbasen, bei denen die Wandler in Staves über den Umfang eines Zylinders verteilt angeordnet sind, oder sog. conformal arrays, wie sie vorzugsweise an Unterwasserlaufkörpern angeordnet sind und am Bug oder Kopf eine zur Vorausrichtung symmetrische Anordnung der Wandler aufweisen.

## Patentansprüche

1. Verfahren zur Bildung eines Gruppensignals einer Richtcharakteristik einer Wandleranordnung (10), die aus einer Gruppe von gemeinsam betriebenen, auf einem gekrümmten Träger (12) angeordneten, elektroakustischen Wandlern (11) besteht, bei dem an den Wandlern (11) bei Schallempfang abnehmbare elektrische Empfangssignale zeitverzögert und zum Gruppensignal konphas aufaddiert werden, **dadurch gekennzeichnet, dass** die Verzögerungszeiten der Empfangssignale solange wiederholt vergrößert und verkleinert und die verzögerten Empfangssignale zum Gruppensignal aufaddiert werden, bis der Wert einer Größe des Gruppensignals maximal ist.

2. Verfahren nach Anspruch 1, **dadurch gekennzeichnet, dass** die Verzögerungszeiten (τ₀) der Empfangssignale aus der Geometrie der Wandleranordnung (10) mit einer mittleren Schallgeschwindigkeit (c) berechnet werden und zur Berechnung der verkleinerten und vergrößerten Verzögerungszeiten (τ₀) ein konstantes Inkrement der Schallgeschwindigkeit (c) vorgegeben wird, um das die mittlere Schallgeschwindigkeit (c) vergrößert bzw. verkleinert wird.

3. Verfahren nach Anspruch 1 oder 2 ,**dadurch gekennzeichnet, dass** zum Auffinden des Maximums des Größenwertes des Gruppensignals ein erster Größenwert (P₋₁) mit gegenüber den zuerst verwendeten Verzögerungszeiten (Erstverzögerungszeiten τ₀) verkleinerte Vergrößerungszeiten und ein zweiter Größenwert (P₊₁) mit gegenüber den Erstverzögerungszeiten (τ₀) vergrößerten Verzögerungszeiten bestimmt wird und die beiden Größenwerte (P₋₁, P₊₁) zu dem mit den Erstverzögerungszeiten (τ₀) bestimmten ursprünglichen Größenwert (Ursprungsgrößenwert P₀) in Bezug gesetzt werden.

4. Verfahren nach Anspruch 3, **dadurch gekennzeichnet, dass** der erste und zweite Größenwert (P₋₁, P₊₁) mit dem Ursprungsgrößenwert (P₀) verglichen wird und im Falle, dass der Ursprungsgrößenwert (P₀) nicht größer ist als der erste und zweite Größenwert (P₋₁, P₊₁), die Erstverzögerungszeiten (τ₀) korrigiert werden und mit den korrigierten Erstverzögerungszeiten (τ*₀) ein korrigierter Ursprungsgrößenwert (P*₀) bestimmt wird und dass die Bestimmung eines neuen ersten und zweiten Größenwerts (P*₋₁, P*₊₁) mit gegenüber den korrigierten Erstverzögerungszeiten (τ*₀) verkleinerten bzw. vergrößerten Verzögerungszeiten und Vergleich mit dem korrigierten Ursprungsgrößenwert (P*₀) solange wiederholt wird, bis der korrigierte Ursprungsgrößenwert (P*₀) größer ist als die neuen ersten und zweiten Größenwerte (P*₋₁, P*₊₁).

5. Verfahren nach Aspruch 4, **dadurch gekennzeichnet, dass** eine Korrektur der Erstverzögerungszeiten (τ*₀) zu größeren Verzögerungszeiten hin vorgenommen wird, wenn der zweite Größenwert (P₊₁) größer ist als der Ursprungsgrößenwert (P₀) und zu kleineren Verzögerungszeiten hin vorgenommen wird, wenn der zweite Größenwert (P₊₁) kleiner ist als der Ursprungsgrößenwert (P₀).

6. Verfahren nach Anspruch 3, **dadurch gekennzeichnet, dass** der erste Größenwert (P₋₁), der Ursprungsgrößenwert (P₀) und der zweite Größenwert (P₊₁) mehrmals in der genannten Reihenfolge vor- und rückwärts abgetastet und die Abtastwerte einer Frequenzanalyse unterzogen werden, dass im Falle, dass die spektrale Frequenz kleiner ist als die doppelte Abtastfrequenz, mit korrigierten Erstverzögerungszeiten (τ*₀) ein korrigierter Ursprungsgrößenwert (P*₀) bestimmt wird und dass die Bestimmung eines neuen ersten und eines neuen zweiten Größenwerts (P*₋₁, P*₊₁) mit gegenüber den korrigierten Erstverzögerungszeiten (τ*₀) verkleinerten bzw. vergrößerten Verzögerungszeiten sowie die Abtastung des neuen ersten Größenwerts (P*₋₁), des korrigierten Ursprungsgrößenwerts (P*₀) und des neuen zweiten Größenwerts (P*₊₁) mit anschließender Frequenzanalyse solange wiederholt wird, bis die spektrale Frequenz gleich der doppelten Abtastfrequenz ist.

7. Verfahren nach Anspruch 6, **dadurch gekennzeichnet, dass** die Phase eines aus einer komplexen Fourietransformation der Abtastwerte gewonnenen Fouriersignals bestimmt wird und dass eine Korrektur der Erstverzögerungszeiten (τ*₀) zu größeren Verzögerungszeiten hin vorgenommen wird, wenn die Phase positiv ist, und zu kleineren Verzögerungszeiten hin vorgenommen wird, wenn die Phase negativ ist.

8. Verfahren nach einem der Ansprüche 1 - 7, **dadurch gekennzeichnet, dass** als Größe des Gruppensignals dessen Pegel oder Betrag oder Leistung oder Amplitude verwendet wird.
